# EUROPÄISCHE PATENTSCHRIFT

(11) **EP 3 822 061 B1**
(45) Veröffentlichungstag und Bekanntmachung des Hinweises auf die Patenterteilung: **23.03.2022**
(21) Anmeldenummer: 19209704.6
(22) Anmeldetag: 18.11.2019
(51) Int. Cl.: B29C 49/20, B29C 49/42, B60K 15/03

(54) **VERFAHREN ZUR HERSTELLUNG EINES KUNSTSTOFFTANKS**
METHOD FOR PRODUCING A PLASTIC TANK
PROCÉDÉ DE FABRICATION D'UN RÉSERVOIR EN PLASTIQUE

(43) Veröffentlichungstag der Anmeldung: 19.05.2021
(73) Patentinhaber: Magna Energy Storage Systems GesmbH, 8261 Sinabelkirchen (AT)
(72) Erfinder: HUMENBERGER, Harald, 8181 St. Ruprecht (AT)
(74) Vertreter: Zangger, Bernd

(56) Entgegenhaltungen:
- WO-A1-94/12334
- WO-A1-2019/081410
- DE-T2- 69 102 487
- US-A1- 2016 052 386

## Beschreibung

### Gebiet der Erfindung

Die vorliegende Erfindung betrifft ein Verfahren zur Herstellung eines Kunststofftanks.

### Stand der Technik

Es ist bekannt, dass Kunststofftanks, die in jüngerer Zeit beispielsweise als Kraftstofftanks von Kraftfahrzeugen wie Personenkraftwagen und Lastkraftwagen verbaut werden, zusätzlich zu einer Reihe positiver Eigenschaften, problematisch sind in Bezug auf mögliche Verformungen des Kraftstofftanks. Bei üblichem Betrieb von Tanksystemen in Kraftfahrzeugen kann es in bestimmten Zonen des Tanksystems zu hohen Verformungen kommen. Verkettungen von Druck und Temperaturspitzen in Zonen des Tankes können, vor allem bei Kunststofftanks, hohe Relativbewegungen der Tankschalen bedingen und müssen durch konstruktive Maßnahmen beschränkt werden.

Stützkonzepte zur Verringerung der unerwünschten Verformungen der Kraftstofftanks, die aus dem Stand der Technik bekannt sind, verwenden zumeist karosseriefeste Anlagepunkte um Verformungen der Tankwände zu begrenzen. Insbesondere für unter Druck befindliche Tanksysteme reichen diese Maßnahmen jedoch nicht aus und es müssen zusätzliche Maßnahmen verwendet werden, um Verformungen zu vermindern. Oftmals wird die Schalendicke der Tankblase erhöht oder es werden versteifende Bauteile an der Tankwand befestigt, um die Verformung zu begrenzen. Allerdings ist die Anbringung von versteifenden Bauteilen an einer Tankwand bisher zeit- und kostenintensiv und wenig flexibel in Hinblick auf verwendbare Bauteil-Geometrien zur Versteifung.

Die US 2016/052386 A1 offenbart ein Verfahren zum Schweißen einer Faserverstärkung bei der Herstellung eines Objekts, das aus einer Anordnung eines Tanks und eines Füllrohrs ausgewählt ist, wobei das Objekt eine Wand aus thermoplastischem Material enthält, wobei die Faserverstärkung sowohl ein thermoplastisches Material enthält, das mit dem des Objekts kompatibel ist, als auch geschnittene Fasern oder lange Fasern oder Endlosfasern, die gewebt sein können oder nicht, wobei das Schweißverfahren umfasst: Erhitzen der Faserverstärkung, um die Faserverstärkung in einen geschmolzenen Zustand zu bringen; Schweißen der beheizten Faserverstärkung, in einer Form, an die Wand in einem zumindest teilweise geschmolzenen Zustand unter Verwendung des Drucks eines Gases, das die Wand gegen die Form aufbläst.

Aus der DE 691 02 487 T2 ist ein Verfahren zum Ausformen eines einstückigen Tanks aus Kunststoff für Kraftstoff bekannt, bei welchem eine Außenfläche eines insgesamt dünnwandigen, hohlen, luftdichten Trägers mit einem Fasermaterial beschichtet, der beschichtete Träger in eine Form eingesetzt, Druck auf den Innenraum des Trägers ausgeübt, Harz zwischen eine Innenfläche der Form und der Träger-Außenfläche eingespritzt, wodurch die Fasermaterialteile imprägniert werden, wobei der mit Druck beaufschlagte Träger dazu verwendet wird, das Kollabieren der imprägnierten Fasermaterialteile zu verhindern, das Harz ausgehärtet, die Form geöffnet, und der Tank aus der Form entfernt wird, wobei der Schritt der Beschichtung einer Außenfläche eines Trägers und des Einsetzens des Trägers in eine Form die Verwendung einer für Kraftstoff undurchlässigen Einlage als Träger umfaßt, um einen inneren hohlen Abschnitt des Tanks zu bilden, wobei der Träger für den ausgeformten Tank darüber hinaus eine gegen Kraftstoff beständige Einlage bildet.

### Zusammenfassung der Erfindung

Es ist eine Aufgabe der Erfindung, ein Verfahren zur Herstellung eines Kunststofftanks anzugeben, wobei der Kunststofftank gegen Verformungen geschützt ist. Dabei soll das Verfahren insbesondere effizient durchgeführt werden können und hinsichtlich der Versteifungsgeometrien flexibel sein.

Die Lösung der Aufgabe erfolgt durch ein Verfahren zur Herstellung eines Kunststofftanks, wobei zumindest eine Außenschicht der Tankwand des Kunststofftanks aus einem ersten Material besteht, wobei auf eine Außenschicht der Tankwand des Kunststofftanks in zumindest einem Bereich eine Verstärkungsplatte die zumindest teilweise aus dem ersten Material besteht angebracht wird, wobei zunächst die Tankwand als heiße Halbzeugplatte bereitgestellt wird, dass außerhalb eines formgebenden Werkzeugs die Verstärkungsplatte auf der heißen Halbzeugplatte befestigt wird, insbesondere angeschweißt wird, wobei die heiße Halbzeugplatte von einer Haltevorrichtung gehalten ist, während außerhalb des formgebenden Werkzeugs die Verstärkungsplatte auf der Halbzeugplatte befestigt wird, dass danach die Halbzeugplatte mit der befestigten Verstärkungsplatte in das formgebende Werkzeug eingebracht wird und in dem formgebenden Werkzeug zur Tankwand des Kunststofftanks geformt wird, wodurch die Verstärkungsplatte stärker an der Tankwand befestigt wird, insbesondere mit der Tankwand stärker verschweißt.

Erfindungsgemäß wird eine Verstärkungsplatte als verstärkendes Element auf eine Tankwand aufgebracht, wobei die Aufbringung zweistufig erfolgt:
zunächst wird die Verstärkungsplatte außerhalb eines formgebenden Werkzeugs nur leicht befestigt. Da die Verstärkungsplatte zumindest teilweise aus dem selben Material besteht wie die Tankwand, insbesondere aus dem selben Kunststoff besteht oder diesen selben Kunststoff umfasst, kann die Verstärkungsplatte insbesondere einfach auf die Tankwand gedrückt werden, so dass die Verstärkungsplatte an die heiße Tankwand angeschmolzen bzw. angeschweißt wird. Die selbe Tankwand wird dann mit angebrachter Verstärkungsplatte, auch "Patch" genannt, in einem formgebenden Werkzeug in die Endform des Kunststofftanks geformt,
wobei die Verstärkungsplatte durch die dabei herrschenden Bedingungen, insbesondere Drücke, noch stärker an der Tankwand befestigt wird bzw. mit dieser verschweißt bzw. stärker verschmolzen wird.

Erfindungsgemäß ist die heiße Halbzeugplatte von einer Haltevorrichtung gehalten, bevorzugt mittels eines Unterdrucks, während außerhalb des formgebenden Werkzeugs die Verstärkungsplatte auf der Halbzeugplatte befestigt wird.

Durch die erfindungsgemäße Einbringung des Patches bzw. der Verstärkungsplatte außerhalb des Umform-Werkzeugs ist die abbildbare Komplexität der Oberflächengeometrie der Verstärkungsplatte sowie die erreichbaren Umformgrade sehr hoch.

Der Begriff "Außenschicht" bezieht sich auf eine außen liegende Schicht der Tankwand und kann bei einem fertig geformten Kunststofftank innen oder außen am Behälter liegen.

Die Tankwand ist bevorzugt mehrschichtig bzw. mehrlagig aufgebaut, kann jedoch auch aus einer einzigen Schicht bestehen.

Weiterbildungen der Erfindung sind in den abhängigen Ansprüchen, der Beschreibung sowie den beigefügten Zeichnungen angegeben.

Vorzugsweise besteht die Verstärkungsplatte aus einem faserverstärkten Kunststoff, wobei die Faserverstärkung in eine Matrix eingebettet ist und wobei die Matrix aus dem ersten Material besteht.

Das erste Material ist vorzugsweise High Density Polyethylen (HDPE).

Die Verstärkungsplatte ist besonders bevorzugt ein Glasfasergewebe.

Außerhalb des formgebenden Werkzeugs wird die Verstärkungsplatte vorzugsweise mittels eines ausfahrbaren Stempels auf der Halbzeugplatte befestigt.

Der Stempel kann die Verstärkungsplatte mittels eines Unterdrucks halten. Der Unterdruck wird vorzugsweise beendet, wenn die Verstärkungsplatte auf der heißen Halbzeugplatte befestigt ist. Der Stempel wird dann wieder von der Halbzeugplatte entfernt, insbesondere zurückgezogen.

Die Oberfläche des Stempels ist vorzugsweise relativ zu einer vorgesehenen Neutrallage der Halbzeugplatte geneigt. Hierdurch kann ein Durchhängen der heißen Halbzeugplatte ausgeglichen werden und die Verstärkungsplatte parallel zum betreffenden Abschnitt der Halbzeugplatte aufgebracht werden.

Bevorzugt wird der Stempel kraft- oder weggesteuert in die heiße Halbzeugplatte eingedrückt, um außerhalb des formgebenden Werkzeugs die Verstärkungsplatte auf der heißen Halbzeugplatte zu befestigen.

Die heiße Halbzeugplatte kann in einem Schneidewerkzeug beschnitten werden, insbesondere bevor die heiße Halbzeugplatte bereitgestellt wird um die Verstärkungsplatte daran zu befestigen.

Bevorzugt wird die Halbzeugplatte durch Tiefziehen in dem formgebenden Werkzeug zur Tankwand des Kunststofftanks geformt, insbesondere mittels eines Unterdrucks.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäß hergestellten Kunststofftanks.
- Fig. 2: ist eine schematische Darstellung eines erfindungsgemäßen Verfahrens zur Herstellung eines Kunststofftanks.
- Fig. 3: ist eine schematische Darstellung der Anbringung einer Verstärkungsplatte in einem erfindungsgemäßen Verfahren gemäß Fig. 2.
- Fig. 4: ist eine schematische Detaildarstellung von ersten Schritten zur Anbringung einer Verstärkungsplatte in einem erfindungsgemäßen Verfahren gemäß Fig. 2.
- Fig. 5: ist eine schematische Detaildarstellung von zweiten Schritten zur Anbringung einer Verstärkungsplatte in einem erfindungsgemäßen Verfahren gemäß Fig. 2.

### Detaillierte Beschreibung der Erfindung

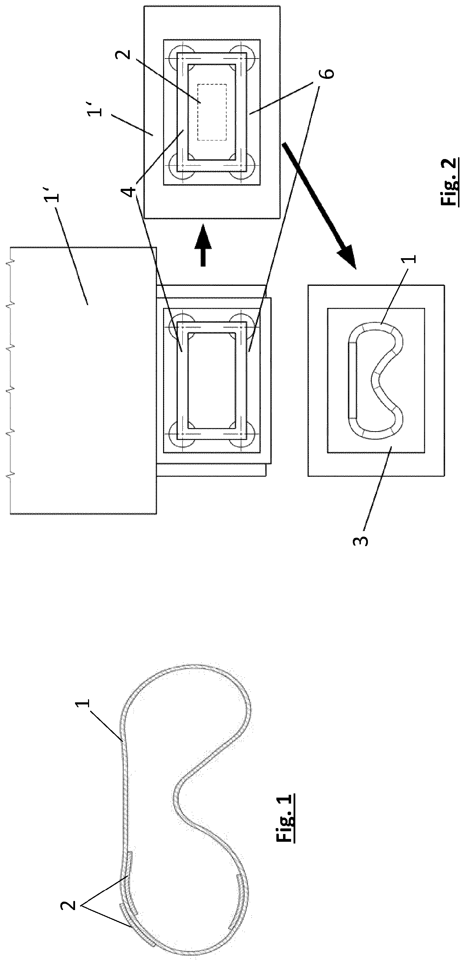

Die lokale Verformung einer Tankschale soll durch Anbringung von Strukturbauteilen, also Verstärkungsplatten 2, insbesondere faserverstärkten Strukturbauteilen, reduziert werden. Hierzu können diese Verstärkungsplatten 2, Strukturbauteile oder Patches innerhalb und/oder außerhalb des Tankes angebracht werden. Fig. 1 zeigt einen solchen Kunststofftank, wobei die Tankwand 1 des Kunststofftanks durch Anbringung von Verstärkungsplatten 2 bzw. Patches in verschiedenen Bereichen partiell verstärkt ist. Zumindest eine Außenschicht der Tankwand 1 des Kunststofftanks besteht aus HDPE. Auf die Außenschicht der Tankwand 1 des Kunststofftanks ist in mehreren Bereichen eine Verstärkungsplatte 2, die zumindest teilweise aus dem selben Material HDPE besteht, angebracht. Die Verstärkungsplatten 2 bestehen aus einem faserverstärkten Kunststoff, wobei die Faserverstärkung in eine Matrix eingebettet ist und wobei die Matrix aus dem High Density Polyethylen besteht.

Zur Herstellung eines solchen Kunststofftanks, wird, wie in Fig. 2 schematisch dargestellt, zunächst die Tankwand 1 als heiße Halbzeugplatte 1' bereitgestellt, wobei die Halbzeugplatte 1' zunächst eine unbeschnittene, beispielsweise endlose, Mehrschichtplatte sein kann.

Die heiße Halbzeugplatte 1' wird in einem Schneidewerkzeug 6 beschnitten, und danach bereitgestellt, um die Verstärkungsplatten 2 daran zu befestigen.

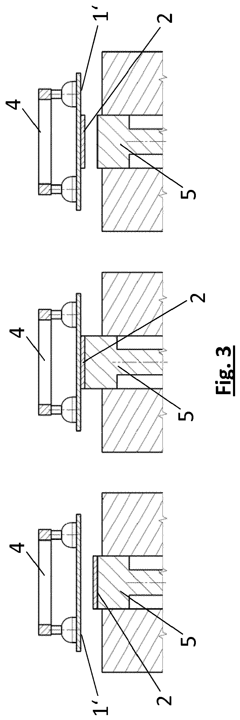

Außerhalb eines formgebenden Werkzeugs 3, in welchem später die Form der Tankschale ausgebildet wird, werden die Verstärkungsplatten 2 auf der heißen Halbzeugplatte 1' befestigt, insbesondere angeschmolzen - wie in den Fig. 3 bis 5 näher dargestellt ist.

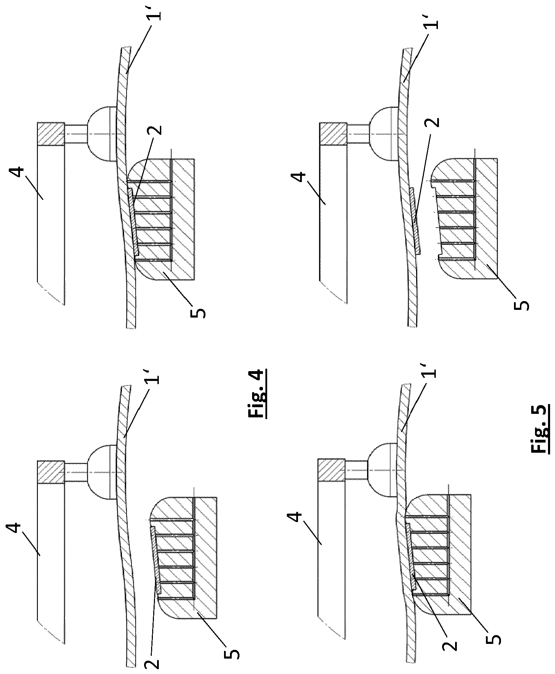

In den Fig. 3 bis 5 ist gut ersichtlich, dass die heiße Halbzeugplatte 1' von einer Haltevorrichtung 4 gehalten ist, insbesondere mittels eines Unterdrucks, während außerhalb des formgebenden Werkzeugs 3 die Verstärkungsplatte 2 auf der Halbzeugplatte 1' befestigt wird. Die Halbzeugplatte 1' kann von oben gehalten sein, so dass sie nach unten durchhängen kann, wie in den Detaildarstellungen Fig. 4 und 5 ersichtlich.

Außerhalb des formgebenden Werkzeugs 3 wird die Verstärkungsplatte 2 mittels eines ausfahrbaren Stempels 5 auf der Halbzeugplatte 1' befestigt.

Danach wird die Halbzeugplatte 1' mit den befestigten Verstärkungsplatten 2 in das formgebende Werkzeug 3 eingebracht und in dem formgebenden Werkzeug 3 zur Tankwand 1 des Kunststofftanks geformt, wodurch die Verstärkungsplatten 2 stärker an der Tankwand 1 befestigt werden, nämlich mit der Tankwand 1 stärker verschmolzen bzw. verschweißt werden.

Die Halbzeugplatte 1' wird durch Tiefziehen in dem formgebenden Werkzeug 3 zur Tankwand 1 des Kunststofftanks geformt, insbesondere mittels eines Unterdrucks, somit bevorzugt durch Vakuumtiefziehen.

Das beschriebene Verfahren beruht somit auf der Positionierung und Verschmelzung des Matrixwerkstoffes HDPE der Faserpatches bzw. Verstärkungsplatten 2 mit dem HDPE Außenschichtmaterial der Tankschale außerhalb des formgebenden Werkzeuges 3.

Die beschriebene Verschmelzung findet in einem zweistufigen Prozess statt. In einem ersten Schritt wird das Patch 2 an einer definierten Stelle der Halbzeugplatte 1' positioniert und durch Kontaktierung von Halbzeug 1' und Faserpatch 2 befestigt. Durch den darauffolgenden Tiefziehvorgang wird eine dauerhafte Verschmelzung der beiden Materialien bewerkstelligt und es bildet sich eine unlösliche stoffschlüssige Verbindung.

Nach der Herstellung einer heißen Mehrschichtplatte wird diese zur Schneide- und Verarbeitungsvorrichtung 6 befördert. Nach erfolgtem Schneideprozesses der Halbzeugplatte 1' wird diese in der Haltevorrichtung 4 aufgenommen und die Halbzeugplatte 1' zu einer Vorrichtung zur Anbringung des Faserpatches 2 geführt. Nach Anhaftung des Faserpatches 2 wird die nunmehr mit dem Faserpatch 2 armierte Halbzeugplatte 1' zur Werkzeugform 3 geführt und im Formprozess in ihre finale Gestalt umgeformt.

Fig. 3 zeigt schematisch die Anbringung der Verstärkungsplatten 2.

Die Haltevorrichtung 4 mit der heißen Halbzeugplatte 1' wird in eine exakt definierte Position über einem Stempel 5 gebracht. Das Faserpatch 2 ist auf diesem Stempel 5 positioniert und wird durch Applikation in Kontakt mit der heißen Platte 1' gebracht. Es kann sich hierbei um ein erhitztes oder auf Raumtemperatur befindliches Patch bzw. Verstärkungsplatte 2 handeln.

Die Fig. 4 zeigt in einem Detailschema die Befestigung einer Verstärkungsplatte 2 an einem Stempel 5 und die Positionierung der Verstärkungsplatte 2 bzw. des Faserpatches am Halbzeug 1'.

Das Faserpatch 2 wird auf dem Stempel 5 durch die Beaufschlagung mit einem Unterdruck in Position gehalten. Dieser Unterdruck wird vorzugsweise durch eine umlaufende Nut oder durch den Einsatz von Bohrungen realisiert. Bei der Anbringung des Stempels 5 verbleibt der Unterdruck bis die Positionierung abgeschlossen ist. Der natürliche Durchhang des noch teil-plastifizierten Mehrschichtwerkstoffes 1' wird durch eine geeignete Neigung des Stempels 5 relativ zur Neutrallage des Halbzeuges 1' kompensiert. Diese Neigung kann neben der Form des Stempels 5 auch durch eine Lagerung durch ein Knick- oder Kugelgelenk des Stempels 5 umgesetzt sein.

Fig. 5 zeigt in einem Detailschema die Befestigung der Verstärkungsplatte 2 an der Halbzeugplatte 1' sowie den initialen Anhaftvorgang.

Zur Aufbringung des notwendigen Anpressdruckes wird der Stempel 5 bis zu einer gewissen Endposition kraft- oder weggesteuert in die teilplastifizierte Halbzeugplatte 1' eingedrückt. Zu diesem Zweck können die Randbereiche des Stempels 5 mit einer Schräge versehen sein. Die Anpressung des Glasfaserpatches 2 an die Halbzeugplatte 1' kann zusätzlich durch eine umlaufende Vakuumnut oder umlaufende Vakuumbohrungen verstärkt werden. Hierbei wird die Halbzeugplatte 1' zusätzlich durch die Vakuumnut oder die Vakuum-Bohrungen an die Oberfläche des Stempels 5 gesaugt.

Nach erfolgter Anpresszeit wird das Vakuum für die Befestigung des Patches 2 deaktiviert und der Stempel 5 verfährt ohne Faserpatch 2 wieder in die Ausgangsposition.

Die nunmehr mit dem Faserpatch bzw. der Verstärkungsplatte 2 armierte Halbzeugplatte 1' wird dem Tiefziehvorgang zugeführt, in dem durch die Aufbringung von werkzeugseitigem Unterdruck eine bleibende stoffschlüssige Verbindung von Faserpatch 2 und der nunmehr entstandenen Tankwand 1 entsteht.

### Bezugszeichenliste

- 1: Tankwand
- 1': Halbzeugplatte
- 2: Verstärkungsplatte
- 3: Formgebendes Werkzeug
- 4: Haltevorrichtung
- 5: Stempel
- 6: Schneidewerkzeug

## Patentansprüche

1. Verfahren zur Herstellung eines Kunststofftanks, wobei zumindest eine Außenschicht der Tankwand (1) des Kunststofftanks aus einem ersten Material besteht, wobei auf eine Außenschicht der Tankwand (1) des Kunststofftanks in zumindest einem Bereich eine Verstärkungsplatte (2), die zumindest teilweise aus dem ersten Material besteht, angebracht wird, wobei zunächst die Tankwand (1) als heiße Halbzeugplatte (1' ) bereitgestellt wird,
**dadurch gekennzeichnet, dass** außerhalb eines formgebenden Werkzeugs (3) die Verstärkungsplatte (2) auf der heißen Halbzeugplatte (1' ) befestigt wird, insbesondere angeschweißt wird, wobei die heiße Halbzeugplatte (1' ) von einer Haltevorrichtung (4) gehalten ist, während außerhalb des formgebenden Werkzeugs (3) die Verstärkungsplatte (2) auf der Halbzeugplatte (1' ) befestigt wird, dass danach die Halbzeugplatte (1' ) mit der befestigten Verstärkungsplatte (2) in das formgebende Werkzeug (3) eingebracht wird und in dem formgebenden Werkzeug (3) zur Tankwand (1) des Kunststofftanks geformt wird, wodurch die Verstärkungsplatte (2) stärker an der Tankwand (1) befestigt wird, insbesondere mit der Tankwand (1) stärker verschweißt.

2. Verfahren nach Anspruch 1,
**dadurch gekennzeichnet, dass** die Verstärkungsplatte (2) aus einem faserverstärkten Kunststoff besteht, wobei die Faserverstärkung in eine Matrix eingebettet ist und wobei die Matrix aus dem ersten Material besteht, wobei das erste Material vorzugsweise High Density Polyethylen ist.

3. Verfahren nach zumindest einem der vorhergehenden Ansprüche, **dadurch gekennzeichnet, dass** die heiße Halbzeugplatte (1' ) mittels eines Unterdrucks von der Haltevorrichtung (4) gehalten ist, während außerhalb des formgebenden Werkzeugs (3) die Verstärkungsplatte (2) auf der Halbzeugplatte (1') befestigt wird.

4. Verfahren nach zumindest einem der vorhergehenden Ansprüche, **dadurch gekennzeichnet, dass** außerhalb des formgebenden Werkzeugs (3) die Verstärkungsplatte (2) mittels eines ausfahrbaren Stempels (5) auf der Halbzeugplatte (1' ) befestigt wird.

5. Verfahren nach Anspruch 4,
**dadurch gekennzeichnet, dass** der Stempel (5) die Verstärkungsplatte (2) mittels eines Unterdrucks hält, wobei der Unterdruck vorzugsweise beendet wird, wenn die Verstärkungsplatte (2) auf der heißen Halbzeugplatte (1' ) befestigt ist.

6. Verfahren nach Anspruch 4 oder 5,
**dadurch gekennzeichnet, dass** die Oberfläche des Stempels (5) relativ zu einer vorgesehenen Neutrallage der Halbzeugplatte (1' ) geneigt ist.

7. Verfahren nach zumindest einem der Ansprüche 4 bis 6,
**dadurch gekennzeichnet, dass** der Stempel (5) kraft- oder weggesteuert in die heiße Halbzeugplatte (1' ) eingedrückt wird, um außerhalb des formgebenden Werkzeugs (3) die Verstärkungsplatte (2) auf der heißen Halbzeugplatte (1' ) zu befestigen.

8. Verfahren nach zumindest einem der vorhergehenden Ansprüche, **dadurch gekennzeichnet, dass** die heiße Halbzeugplatte (1' ) in einem Schneidewerkzeug (6) beschnitten wird, bevor die heiße Halbzeugplatte (1' ) bereitgestellt wird, um die Verstärkungsplatte (2) zu befestigen.

9. Verfahren nach zumindest einem der vorhergehenden Ansprüche, **dadurch gekennzeichnet, dass** die Halbzeugplatte (1' ) durch Tiefziehen in dem formgebenden Werkzeug (3) zur Tankwand (1) des Kunststofftanks geformt wird, insbesondere mittels eines Unterdrucks.

## Claims

1. Method for producing a plastic tank, wherein at least one outer layer of the tank wall (1) of the plastic tank is composed of a first material, wherein a reinforcing sheet (2), which is composed at least partially of the first material, is attached to an outer layer of the tank wall (1) of the plastic tank in at least one region, whereby first of all the tank wall (1) is prepared as a hot semifinished sheet (1'), **characterized in that** - the reinforcing sheet (2) is secured, in particular welded, on the hot semifinished sheet (1') outside a shaping tool (3), wherein the hot semifinished sheet (1') is held by a holding device (4), while the reinforcing sheet (2) is secured on the semifinished sheet (1') outside the shaping tool (3), **in that** the semifinished sheet (1') is then introduced with the secured reinforcing sheet (2) into the shaping tool (3), and is shaped in the shaping tool (3) to form the tank wall (1) of the plastic tank, whereby the reinforcing sheet (2) is secured more strongly on the tank wall (1), in particular welded more strongly to the tank wall (1).

2. Method according to Claim 1,
**characterized in that** the reinforcing sheet (2) is composed of a fibre-reinforced plastic, wherein the fibre reinforcement is embedded into a matrix and wherein the matrix is composed of the first material, wherein the first material is preferably high-density polyethylene.

3. Method according to at least one of the preceding claims, **characterized in that** the hot semifinished sheet (1') is held by a holding device (4) by means of a vacuum, while the reinforcing sheet (2) is secured on the semifinished sheet (1') outside the shaping tool (3).

4. Method according to at least one of the preceding claims, **characterized in that**, outside the shaping tool (3), the reinforcing sheet (2) is secured on the semifinished sheet (1') by means of an extendable ram (5).

5. Method according to Claim 4,
**characterized in that** the ram (5) holds the reinforcing sheet (2) by means of a vacuum, wherein the vacuum is preferably ended when the reinforcing sheet (2) has been secured on the hot semifinished sheet (1').

6. Method according to Claim 4 or 5,
**characterized in that** the surface of the ram (5) is inclined relative to an envisaged neutral position of the semifinished sheet (1').

7. Method according to at least one of Claims 4 to 6,
**characterized in that** the ram (5) is pressed into the hot semifinished sheet (1') in a force- or path-controlled manner in order to secure the reinforcing sheet (2) on the hot semifinished sheet (1') outside the shaping tool (3).

8. Method according to at least one of the preceding claims, **characterized in that** the hot semifinished sheet (1') is trimmed in a cutting tool (6) before the hot semifinished sheet (1') is made available for securing the reinforcing sheet (2).

9. Method according to at least one of the preceding claims,
**characterized in that** the semifinished sheet (1') is shaped to form the tank wall (1) of the plastic tank by deep drawing in the shaping tool (3), in particular by means of a vacuum.

## Revendications

1. Procédé de fabrication d'un réservoir en plastique, au moins une couche extérieure de la paroi de réservoir (1) du réservoir en plastique étant constituée d'un premier matériau, une plaque de renforcement (2), qui est constituée au moins partiellement du premier matériau, étant disposée sur une couche extérieure de la paroi de réservoir (1) du réservoir en plastique dans au moins une zone, la paroi de réservoir (1) étant tout d'abord fournie sous forme de plaque semi-finie chaude (1'),
**caractérisé en ce que** la plaque de renforcement (2) est fixée, notamment soudée, sur la plaque semi-finie chaude (1') à l'extérieur d'un outil de formage (3), la plaque semi-finie chaude (1') étant maintenue par un dispositif de maintien (4) pendant que la plaque de renforcement (2) est fixée sur la plaque semi-finie (1') à l'extérieur de l'outil de formage (3), **en ce qu'**ensuite, la plaque semi-finie (1') avec la plaque de renforcement (2) fixée est introduite dans l'outil de formage (3) et est formée dans l'outil de formage (3) en la paroi de réservoir (1) du réservoir en plastique, la plaque de renforcement (2) étant ainsi fixée plus fortement à la paroi de réservoir (1), notamment soudée plus fortement à la paroi de réservoir (1).

2. Procédé selon la revendication 1, **caractérisé en ce que** la plaque de renforcement (2) est constituée d'un plastique renforcé par des fibres, le renforcement par des fibres étant incorporé dans une matrice et la matrice étant constituée du premier matériau, le premier matériau étant de préférence du polyéthylène haute densité.

3. Procédé selon au moins l'une quelconque des revendications précédentes, **caractérisé en ce que** la plaque semi-finie chaude (1') est maintenue par le dispositif de maintien (4) au moyen d'une dépression pendant que la plaque de renforcement (2) est fixée sur la plaque semi-finie (1') à l'extérieur de l'outil de formage (3).

4. Procédé selon au moins l'une quelconque des revendications précédentes, **caractérisé en ce que** la plaque de renforcement (2) est fixée sur la plaque semi-finie (1') au moyen d'un poinçon déployable (5) à l'extérieur de l'outil de formage (3).

5. Procédé selon la revendication 4, **caractérisé en ce que** le poinçon (5) maintient la plaque de renforcement (2) au moyen d'une dépression, la dépression étant de préférence arrêtée lorsque la plaque de renforcement (2) est fixée sur la plaque semi-finie chaude (1').

6. Procédé selon la revendication 4 ou 5, **caractérisé en ce que** la surface du poinçon (5) est inclinée par rapport à une position neutre prévue de la plaque semi-finie (1').

7. Procédé selon au moins l'une quelconque des revendications 4 à 6, **caractérisé en ce que** le poinçon (5) est enfoncé dans la plaque semi-finie chaude (1') d'une manière commandée par la force ou la distance afin de fixer la plaque de renforcement (2) sur la plaque semi-finie chaude (1') à l'extérieur de l'outil de formage (3).

8. Procédé selon au moins l'une quelconque des revendications précédentes, **caractérisé en ce que** la plaque semi-finie chaude (1') est découpée dans un outil de coupe (6) avant que la plaque semi-finie chaude (1') ne soit fournie pour fixer la plaque de renforcement (2).

9. Procédé selon au moins l'une quelconque des revendications précédentes, **caractérisé en ce que** la plaque semi-finie (1') est formée par emboutissage profond dans l'outil de formage (3) en la paroi de réservoir (1) du réservoir en plastique, notamment au moyen d'une dépression.
